# EUROPEAN PATENT APPLICATION

(11) **EP 4 498 194 A1**
(43) Date of publication of application: **29.01.2025**
(21) Application number: 23275112.3
(22) Date of filing: 28.07.2023
(51) Int. Cl.: G05B 19/418, B25J 13/00, B25J 9/16

(54) **A ROBOT CONTROL SYSTEM AND METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A robot control system comprises a robot, a plurality of computer numerical controllers and a plurality of machine control panels wherein each computer numerical controller is wired to each machine control panel. Each computer numerical controller is configured to obtain a memory store for the robot based on an identifier stored in a robot memory of the robot in response to the robot being connected to the respective computer numerical controller, and use the obtained memory store when controlling the robot. Each machine control panel is configured to provide a user interface that enables a user to control the robot when the robot is connected to any computer numerical controller of the plurality of computer numerical controllers.

## Description

### FIELD

The present invention relates to a robot control system, a method performed by a computer numerical controller within a robot control system, and a method performed by a machine control panel within a robot control system.

### BACKGROUND

In robot control systems, a robot is connected or wired to a computer numerical controller that serves as the "brains" of the robot. The robot and computer numerical controller are also connected to a machine control panel which enables a user or operator to input instructions to control the robot. There is usually a one-to-one arrangement between robot, computer numerical controller and machine control panel. This means the robot needs to be served by the correct specific computer numerical controller and correct specific machine control panel. In addition, to ensure a closed system and meet safety requirements, the robot may need to be wired to the appropriate computer numerical controller rather than being connected wirelessly. This reduces the flexibility of robot control systems as the range of the robot is limited by the positioning of the computer numerical controller and the length of the wire between the robot and the computer numerical controller. In addition, if one component of the computer numerical controller, the machine control panel or the robot go offline then the entire robot, computer numerical controller and machine control panel system needs to be taken offline.

It would be desirable to provide a more flexible system that enables a robot to be used in multiple positions or to be switched to a new computer numerical controller or machine control panel if one of the components goes offline. However, the current one-to-one correspondence prevents this.

The embodiments described below are not limited to implementations which solve any or all of the disadvantages of known robot control systems.

### SUMMARY

According to an aspect of the present invention, there is provided a robot control system comprising: a plurality of computer numerical controllers; a plurality of machine control panels wherein each computer numerical controller of the plurality of computer numerical controllers is wired to each machine control panel of the plurality of machine control panels; and a robot wherein the robot comprises a memory storing an identifier for the robot and wherein: each computer numerical controller of the plurality of computer numerical controllers is configured to: obtain a memory store for the robot based on the identifier stored in the robot memory in response to the robot being connected to the respective computer numerical controller, wherein the memory store for the robot comprises control parameters for the robot; and use the obtained memory store when controlling the robot; and each machine control panel is configured to: provide a user interface that enables a user to control the robot when the robot is connected to any computer numerical controller of the plurality of computer numerical controllers. Having a computer numerical controller obtain a memory store for a robot when the robot is connected to the computer numerical controller based on an identifier for the robot means a single computer numerical controller can be used to control one or more of multiple different robots. This provides more flexibility in how robots can be used with computer numerical controllers. In addition, having a plurality of machine control panels wired to the plurality of computer numerical controllers means any machine control panel can be used with any computer numerical controller and hence multiple different robots. This provides enhanced adaptability in how robots are controlled and allows a robot to be used with one of many different machine control panels and computer numerical controllers as required. This also enables a robot to be moved around the system to work with different computer numerical controllers and different machine control panels as required.

In some examples, the robot control system comprises a plurality of robots wherein the robot is a first robot of the plurality of robots and each robot of the plurality of robots comprises a memory storing a respective identifier for the respective robot; and wherein each computer numerical controller is configured to: obtain a memory store for a respective robot of the plurality of robots based on the respective identifier stored in the respective robot memory in response to the respective robot being connected to the respective computer numerical controller; and use the respective obtained memory store when controlling the respective robot; and the user interface of each machine control panel enables a user to control one or more robot from the plurality of robots when the one or more robots are each connected to a respective computer numerical controller of the plurality of computer numerical controllers. Hence, the computer numerical controllers and machine control panels can be used for any of multiple robots in the system. This enables a user to flexible rearrange the robots in the system as required.

In some examples, the robot comprises a selection control on the robot wherein the selection control enables a user to select a machine control panel from the plurality of machine control panels in order to associate the robot with the machine control panel. This provides a secure way for a user to select a machine control panel to control a robot. This ensures the correct machine control panel is controlling the robot and prevents robots being controlled by incorrect machine control panels. In other examples, the robot system further comprises a scanning system configured to scan for robots within a work area and associate each robot in the work area with a nearest machine control panel of the plurality of machine control panels. This provides a way to ensure that a robot is associated with a nearest machine control panel and provides an efficient way of allocating robots to machine control panels.

In some examples, each respective machine control panel of the plurality of machine control panels is associated with a respective colour; and the robot further comprises a light wherein the light is configured to be illuminated in the respective colour of an associated machine control panel. This enables a user and any other users of the system to quickly and easily identify which robots are associated with which machine control panels. This enhances safety as it enables users to distinguish which robots are controlled and by whom and so understand when robots in the system may move. In these examples, the user interface of each machine control panel may comprise a mode control that enables a user to select between a select mode, an operate mode and a remove mode; the light on the robot may then be configured to flash in response to the user setting the machine control panel to the select mode and the robot being associated with the machine control panel; the robot may then further comprise a confirm control wherein the user selecting the confirm control when the light on the robot is flashing causes the robot to be selected for control by the machine control panel; and the user interface of each machine control panel may be further configured to control the robot in response to the user selecting the confirm control on the robot and selecting the operate mode on the mode control. This provides a secure way for a user to determine which robot should be controlled by an associated machine control panel at any one time. The use of a mode control on the machine control panel enables the user of the machine control panel to easily set when they wish to control a new robot. In addition, requiring a confirm control on the robot to be selected ensures that a user cannot accidentally select the incorrect robot from the machine control panel or start controlling a robot without interacting with the robot and thus risking introducing unexpected robot movement into the robot system.

In some examples, the identifier comprises the memory store for the robot; and the respective computer numerical controller obtaining the memory store for the robot comprises the respective computer numerical controller receiving the memory store from the robot. This provides an easy way for a computer numerical controller to be configured to work with a new robot. This is because the computer numerical controller obtains the memory store in response to be connected to the robot. Hence, minimal set up of each robot with each computer numerical controller is required.

In other examples, the respective computer numerical controller comprises a memory storing the memory store for the robot, wherein the memory store for the robot is identified using the identifier for the robot; and the respective computer numerical controller obtaining the memory store for the robot comprises the respective computer numerical controller obtaining the identifier from the robot and obtaining the memory store identified by the identifier from the memory of the respective computer numerical controller. This provides an alternative method for a computer numerical controller to be able to operate with multiple different robots. In addition, by having the computer numerical controller store the memory store reduce demands on the memory of the robot.

In yet further examples, the robot control system further comprises a central memory accessible by each computer numerical controller of the plurality of computer numerical controllers, wherein the central memory stores the memory store for the robot and the memory store for the robot is identified using the identifier for the robot; and the respective computer numerical controller obtaining the memory store for the robot comprises the respective computer numerical controller obtaining the identifier from the robot and obtaining the memory store identified by the identifier from the central memory. This provides a way for a computer numerical controller to control one of multiple robots even when the robots have minimal memory and ensuring minimal set up since the memory store only needs to be set up in the central memory.

In some examples, the robot comprises a robotic arm. Robotic arms are useful robots for manufacture such as the manufacture of aircraft.

According to an aspect of the present invention, there is provided a method of configuring a computer numerical controller to control a robot. The method comprises connecting, by a user, the robot to be controlled by the computer numerical controller to the computer numerical controller; in response to the robot being connected to the computer numerical controller, obtaining, by the computer numerical controller, a memory store for the robot wherein the memory store for the robot comprises control parameters for the robot; and using, by the computer numerical controller the control parameters for the robot to control the robot. Having the computer numerical controller obtain a memory store for the robot in response to the robot being connected to the computer numerical controller enables the computer numerical controller to obtain a memory store based on the robot being connected to the computer numerical controller and thus enables the computer numerical controller to be used to control different robots that use different memory stores.

In some examples, connecting, by the user, the robot to the computer numerical controller comprises wiring, by the user, the robot to the computer numerical controller. This provides a secure way of connecting the robot to the computer numerical controller that is harder to intercept thus providing increased security.

In some examples, using, by the computer numerical controller, the control parameters for the robot to control the robot comprises: using, by the computer numerical controller the control parameters for the robot to control the robot in accordance with user commands received from a machine control panel associated with the robot. The use of a machine control panel enables a user to control the robot in accordance with commands entered into the machine control panel.

In some examples, the machine control panel associated with the robot is determined by a user selecting the machine control panel using a selection control on the robot. This provides a secure method of selecting a machine control panel that requires the user selecting the machine control panel to have access to the robot. In other examples, the machine control panel associated with the robot is determined automatically by a scanning system wherein the scanning system scans for robots within a work area and assigns the robots to a nearest machine control panel of a plurality of machine control panels. This provides an easy way to ensure a robot is associated with the nearest machine control panel.

In some examples, obtaining, by the computer numerical controller, a memory store for the robot comprises obtaining, by the computer numerical controller, the memory store for the robot from the robot in response to the robot being connected to the computer numerical controller. This provides a way for a computer numerical controller to be set up with a new robot since the information for controlling the robot comes from the robot itself.

In other examples, obtaining, by the computer numerical controller, a memory store for the robot comprises: obtaining, by the computer numerical controller, an identifier for the robot from the robot in response to the robot being connected to the computer numerical controller; and obtaining, by the computer numerical controller, the memory store for the robot from a memory of the computer numerical controller that stores a memory store for a plurality of robots, wherein the memory store for the robot is identified using the identifier for the robot. This provides a way for a computer numerical controller to be used with one of multiple robots while keeping the memory requirements of the robot at a minimum.

In further examples, obtaining, by the computer numerical controller, a memory store for the robot comprises: obtaining, by the computer numerical controller, an identifier for the robot from the robot in response to the robot being connected to the computer numerical controller; and obtaining, by the computer numerical controller, the memory store for the robot from a central memory that stores a memory store for a plurality of robots, wherein the central memory is accessible by a plurality of computer numerical controllers, and the memory store for the robot is identified using the identifier for the robot. This provides a way for a computer numerical controller to be used with one of multiple robots while minimizing setup, since each robot only needs to be configured once for the central memory and minimizing the memory requirements of the robot.

According to an aspect of the present invention, there is provided a method of selecting a robot to be controlled by a machine control panel. The method comprises setting, by a user, the machine control panel into a select mode using a mode control on the machine control panel; in response to the machine control panel being set into the select mode causing, by the machine control panel a light on each robot of a group of robots associated with the machine control panel to flash; selecting by the user, a selected robot that will be controlled using the machine control panel by the user selecting a confirm control on the robot; setting, by the user, the machine control panel into an operate mode using the mode control on the machine control panel; and using, by the user, the machine control panel in the operate mode to control the selected robot. This provides a secure method for a user to select a robot to be controlled by a machine control panel when a machine control panel can be used to control one of multiple robots. In particular, this provides a method that enables the user to clearly identify which robot they are controlling. In addition, by requiring the user to select a confirm control on the robot, a user interacts with the robot to be controlled reducing the chances of a user accidentally selecting the wrong robot. In addition, this makes it harder for third parties to maliciously associate a machine control panel with a robot. In a robot system, this ensures that the user is aware of which robot may move and thus can reduce the risk of accidents when robots move unexpectedly.

In some examples, in response to the user selecting a confirm control on the selected robot, the method further comprises continuously illuminating the light on the selected robot. This enables the user to easily establish which robot they have selected. This enhances safety by ensuring a user is always aware of which robot they are currently controlling.

In some examples, the machine control panel is associated with a colour; and the light on each robot of the group of robots flashes the colour associated with the machine control panel. This enables the user and other users to easily establish which robot is associated with which machine control panel. This prevents a user accidentally associating a robot with an incorrect machine control panel by falsely believing they can control a robot that is actually associated with another machine control panel and then selecting that robot, causing the other machine control panel to control that robot.

In some examples, the machine control panel is associated with a colour; and the method further comprises in response to the machine control panel being set to the operate mode illuminating the light on each robot in the group of robots the colour associated with the machine control panel. This enables the user and other users to see which robot is being controlled by which machine control panel. This enhances safety by ensuring all users are aware of which robots are currently undergoing movement

In some examples, the machine control panel is associated with a colour; and the method further comprises further comprises illuminating lights on the floor of a work area around the group of robots the colour associated with the machine control panel, wherein the lights on the floor indicate which robots of a plurality of robots are associated with the machine control panel. This enables a user to clearly see which robots are associated with which machine control panel. This enables a user to identify which robots they are able to control and which robots may be being controlled by other users.

In some examples, the group of robots associated with the machine control panel is determined by the user selecting the machine control panel on each robot using a selection control on the respective robot wherein the selection control can be used to select from multiple different machine control panel. This provides an easy and secure way of associating a robot with a machine control panel. In addition, having the machine control panel be selected on the robot prevents remote third parties allocating a robot to an incorrect machine control panel.

In some examples the group of robots associated with the machine control panel is determined automatically by a scanning system, wherein the scanning system scans for robots within a work area and assigns the robots to a nearest machine control panel of a plurality of machine control panels. This provides an easy way to ensure each robot is allocated to the nearest machine control panel.

### BRIEF DESCRIPTION OF THE FIGURES

Embodiments of the invention will now be described by way of example only with reference to the figures, in which:
Figure 1 shows a robot control system in accordance with the present application;
Figure 2 is a flowchart showing a method of configuring a computer numerical controller to control a robot;
Figure 3 is a flowchart showing a method of selecting a robot to be controlled by a machine control panel; and
Figure 4 is an example computing device that can be used to implement the computer numerical controllers or machine control panels of the robot control system.

Common reference numerals are used throughout the figures to indicate similar features.

### DETAILED DESCRIPTION

The present application relates to a robot control system for controlling at least one robot. Previously, a robot was associated with a single computer numerical controller and a single machine control panel, both of which were remote from the robot. The computer numerical controller acted as the "brains" of the robot and controlled the robot in accordance with commands from a design program and/or the machine control panel. The robot was wired to both the computer numerical controller and the machine control panel. If one of the robot, computer numerical controller, or machine control panel went out of action the entire robot, computer numerical controller and machine control panel system needed to be taken out of action due to the one-to-one correspondence between components. In addition, the positioning of the robot was limited by the positioning of the computer numerical controller and the wire length between the robot and computer numerical controller. This meant that robots could not be used flexibly throughout the system. Furthermore, configuring a robot to work with a computer numerical controller involved a considerable set up process that reduced the flexibility of the system.

The present robot control system comprises a plurality of computer numerical controllers and a plurality of machine control panels that are wired together either in a network or via individual connections. This enables any machine control panel to be used with any computer numerical controller. In addition, when a robot is connected to a computer numerical controller, for example by being wired to the computer numerical controller, the computer numerical controller is configured to obtain a memory store for the robot based on an identifier for the robot and then use this memory store to control the robot. The memory store for the robot comprises control parameters for the robot. In some examples, the identifier for the robot is the memory store for the robot and the memory store/identifier are obtained from the robot in response to the computer numerical controller being connected to the robot. In other examples, the memory store is stored in a memory of either the computer numerical controller or a central memory. The computer numerical controller receives an identifier for the robot in response to the robot being connected to the computer numerical controller. The identifier is then used to identify the correct memory store stored in either the memory of the computer numerical controller or the central memory.

The memory store for the robot comprises any details the computer numerical controller needs to control the robot e.g. command or instruction sets and other details of the robot. This enables the computer numerical controller to be used for different robots at different times since the computer numerical controller can use different memory stores to control different robots. In addition, this enables a robot to connect to different computer numerical controllers at different times since once the robot is connected/wired to a computer numerical controller, the computer numerical controller can obtain the memory store for that robot without requiring further configuration. This means if a computer numerical controller goes off-line, a robot can be used with alternative computer numerical controllers. This also means that a robot can be connected to a conveniently positioned computer numerical controller enabling more flexible positioning of robots in the system. In addition, since the computer numerical controllers are all wired to all of the machine control panels, any machine control panel can be used with any computer numerical controller to control the required robot.

In some examples, the machine control panels which a user or operator uses to control the robots in the system may be associated with a colour wherein each machine control panel is associated with a different colour. The robots in the system comprise a light which can be illuminated in multiple different colours. When a machine control panel is associated with a robot or is being used to control a robot (via a computer numerical controller) the light on the robot can be illuminated the colour associated with the machine control panel. This enables the operator and other operators in the system to know which robots are being controlled and by which computer numerical controller. This provides line-of-sight notification on the control of robots and thus enhances safety.

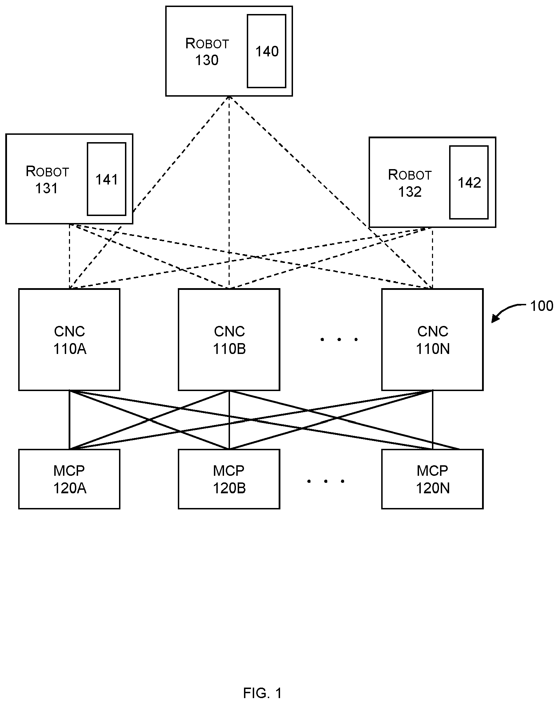

The application relates to a robot control system 100 for controlling a robot which may take the form of a robot arm. As shown in Figure 1, the robot control system comprises a plurality of computer numerical controllers, 110A-110N, a plurality of machine control panels, 120A-120N and at least one robot 130. In the example shown in Figure 1 there are three computer numerical controllers, 110A-110N, and three machine control panels, 120A-120N. However, the skilled person would understand this number is purely for illustration and a different number of computer numerical controllers and machine control panels may be used. In addition, the number of computer numerical controllers and number of machine control panels may be the same or different. The computer numerical controllers 110A-110N may also be referred to by the abbreviation CNC. The machine control panels 120A-120N may also be referred to by the abbreviation MCP.

A computer numerical controller 110A-110N can be considered to be the "brains" of a robot to which it is connected. A computer numerical controller 110A-110N can be considered to control a robot by receiving instructions from a computer-aided design program or an operator/user (for example via a machine control panel 120A-120N) and controlling the robot in accordance with these instructions. In some examples, the instructions may be provided by an operator via a machine control panel 120A-120N.

A machine control panel 120A-120N may provide a user interface that enables an operator or user to control a robot. In some examples, the user interface comprises a plurality of switches and buttons. However, in other examples, the user interface may comprise a graphical user interface displayed on a display. A machine control panel 120A-120N can otherwise be known as a machine starter control panel. A machine control panel 120A-120N enables a user to provide instructions to the robot which are then processed by a computer numerical controller 110A-110N to control the robot.

As shown in Figure 1, each computer numerical controller 110A-110N is wired to each machine control panel 120A-120N. This may be achieved by wiring all the computer numerical controllers 110A-110N and machine control panels 120A-120N to each other in a network formation. Alternatively or in addition, there may be a direct connection between each computer numerical controller 110A-110N and each machine control panel 120A-120N. Each computer numerical controller 110A-110B being wired to each machine control panel 120A-120N enables the computer numerical controllers 110A-110B and the machine control panels 120A-120N to be flexibly paired as needed while ensuring security that may not be present in wireless systems.

The system 100 also comprises at least one robot 130. In some examples the system may comprise only a single robot 130. However, in other examples the system may comprise multiple robots and for example include robots 131 and 132. Each robot 130, 131, 132 in the system 100 comprises a memory 140, 141, 142 that stores an identifier for the robot 130, 131, 132. The identifier can also be referred to as an identity, a reference, an identity number, a reference number etc. The identifier enables the computer numerical controllers 110A-110N to identify the robot 130, 131, 132. In some examples, the memory 140, 141, 142 can comprise, a USB stick or other memory that is attached to the robot 130, 131, 132.

When an operator wishes to use a robot 130, 131, 132 they connect the robot 130, 131, 132 to a computer numerical controller 110A-110N, for example by wiring the robot 130, 131, 132 to the computer numerical controller 110A-110N. In some examples, the computer numerical controllers 110A-110N may be distributed throughout a workspace, the operator can therefore connect/wire the robot 130, 131, 132 to a computer numerical controller 110A-110N that is in a suitable position in the workspace for where the operator wishes to use the robot 130, 131, 132. Each computer numerical controller 110A-110N is configured such that when a robot 130, 131, 132 is connected/wired to the respective computer numerical controller 110A-110N, the computer numerical controller 110A-110N obtains a memory store for the robot 130, 131, 132 based on the identifier of the robot 130, 131, 132 from the robot memory 140, 141, 142. The memory store for the robot 130, 131, 132 contains the information the respective computer numerical controller 110A-110N needs to control the robot 130, 131, 132 for example instruction or command sets or other control software or parameters for the robot 130, 131, 132. Thus, the memory store comprises control parameters for the robot 130, 131, 132. The respective computer numerical controller 110A-110N then controls the robot using the memory store. This control can be in accordance with instructions from a machine control panel 120A-120N and/or in accordance with instructions from a computer aided design program. Having a computer numerical controller 110A-110N obtain a memory store for a connected robot 130, 131, 132 enables the computer numerical controller 110A-110N to provide control to multiple different robots 130, 131, 132 dependent upon which robot 130, 131, 132 is connected to the respective computer numerical controller 110A-110N. This is because different robots 130, 131, 132 tend to require different memory stores. Therefore, to avoid incorrect control of a robot 130, 131, 132 the correct memory store for the robot 130, 131, 132 should be used.

Once the robot 130, 131, 132 has been connected/wired to a specific computer numerical controller 110A-110N of the plurality of computer numerical controllers 110A-110N, the robot 130, 131, 132 can be controlled by a machine control panel 120A-120N of the plurality of machine control panels 120A-120N. To this end, each machine control panel 120A-120N of the plurality of machine control panels 120A-120N is configured to provide a user interface that enables the operator to select a robot 130, 131, 132 that is connected to a computer numerical controller 110A-110N. The respective machine control panel 120A-120N can then be used by the operator to control the selected robot 130, 131, 132. This enables the operator to control the selected robot 130, 131, 132 using a suitably positioned and suitably convenient machine control panel 120A-120N. Details of how a robot 130, 131, 132 is associated with and then selected to operate with a machine control panel 120A-120N are discussed below.

As mentioned above, in some examples, the system 100 may comprise a single robot 130 with robot memory 140. However, in other examples the system may comprise a plurality of robots 130, 131, 132 with each robot 130, 131, 132 having its own robot memory 140, 141, 142 storing a respective identifier for the robot 130, 131, 132. Each computer numerical controller 110A-110N is configured such that when a robot 130 of the plurality of robots 130, 131, 132 is connected, for example via wiring, to the respective computer numerical controller 110A-110N, the respective computer numerical controller 110A-110N obtains a memory store for the robot 130 based on the identifier stored in the robot's memory. The memory store contains the information the respective computer numerical controller 110A-110N needs to control the robot 130. Hence, the memory store comprises control parameters for the robot 130, 131, 132. The respective computer numerical controller 110A-110N then controls the robot 130 using the obtained memory store. As above, this control can be in accordance with instructions from a machine control panel 120A-120N and/or in accordance with instructions from a computer-aided design program.

When the system 100 comprises a plurality of robots 130, 131, 132, the user interface of each machine control panel 120A-120N may enable a user to select one or more robots 130, 131, 132 that are connected to computer numerical controllers 110A-110N to control. Thus, each machine control panel 120A-120N can be used, if required, to control more than one robot 130, 131, 132 of the plurality of robots 130, 131, 132. In some examples, a computer numerical controller 110A-110N can only be connected/wired to a single robot 130, 131, 132 of the plurality of robots 130, 131, 132 at once. However, in other examples, a single computer numerical controller 110A-110N can be connected/wired to more than one robot 130, 131, 132 of the plurality of robots 130, 131, 132 and used to control the more than one robot 130, 131, 132 wherein each robot is controlled using a different memory store.

A machine control panel 120A-120N can be associated with a robot 130, 131, 132 or a plurality of robots 130, 131, 132. This can be referred to as the span of control of the machine control panel 120A-120N. In some examples, while a machine control panel 120A-120N can be associated with a plurality of robots 130, 131, 132 at once, it may be being used to directly control only a (proper) subset of this plurality of robots 130, 131, 132 with the other robots 130, 131, 132 associated with the machine control panel 120A-120N operating autonomously or being inactive. A robot 130, 131, 132 can be associated with a machine control panel 120A-120N of the plurality of machine control panels 120A-120N using a selection control on the robot 130, 131, 132. The selection control comprises a switch, a dial, an element on a graphical user interface or other form of control that enables a user to select a machine control panel 120A-120N from the plurality of machine control panels 120A-120N with which to associate the robot 130, 131, 132. Alternatively, the system 100 can further comprise a scanning system (not shown) configured to scan for robots 130, 131, 132. A robot 130, 132, 132 can be associated with a nearest machine control panel 120A-120N of the plurality of machine control panels 120A-120N as determined by the scanning system. Associating a robot 130, 131, 132 with a machine control panel 120A-120N enables a span of control of the machine control panel 120A-120N to be established.

Once a robot 130, 131, 132 has been associated with a machine control panel 120A-120N of the plurality of machine control panels 120A-120N it can be desirable for a user to select using the machine control panel 120A-120N one or more of the associated robots 130, 131, 132 to control. To this end, the user interface of each machine control panel 120A-120N comprises a mode control that enables a user to select between different modes of the machine control panel 120A-120N. The mode control can also be referred to as a mode selection control, a mode changer, and a mode selector. The mode control can be a swich, lever, dial or other physical component. In other examples the mode control can be a control on a graphical user interface. In some examples, the modes comprise a select mode used to select robots 130, 131, 132 to control in the operate mode, an operate mode in which the machine control panel 120A-120N is used to control the selected robots, and a remove mode in which robots 130, 131, 132 that were previously selected for control during the operate mode are removed from being controlled in the operate mode. It is noted that removing a robot 130, 131, 132 from control in the operate mode does not necessarily remove the robot 130, 131, 132 from being in the span of control of the machine control panel 120A-120N, it simply means that the robot 130, 131, 132 will not be directly controlled when the machine control panel 120A-120N is in the operate mode. When the user wishes to select robots 130, 131, 132 to control using the machine control panel 120A-120N, the user sets the machine control panel 120A-120N into the select mode. In response to the user setting the machine control panel 120A-120N into the select mode, the machine control panel 120A-120N causes (potentially via a relevant computer numerical controller) a light on each robot 130, 131, 132 associated with the machine control panel 120A-120N to flash. In response, the user selects on one or more robots 130, 131, 132 that they wish to control a confirm control. The confirm control can also be referred to as a confirm button or an acknowledge control/button. The confirm control can comprise a button, switch or other physical component or a component of a graphical user interface. When the user selects the confirm control, they indicate that the robot 130, 131, 132 upon which the confirm control was selected should be controlled by the machine control panel 120A-120N. In some examples, in response to the confirm control being selected the light on the robot 130, 131, 132 can stop flashing and instead remain illuminated. This ensures the user can easily establish which robots 130, 131, 132 are selected. The user then returns the mode control on the machine control panel 120A-120N to the operate mode. The machine control panel 120A-120N can then be used by the user to control the robots 130, 131, 132 selected using the confirm control by sending appropriate instructions to the computer numerical controller 110A-110N connected to the robot 130, 131, 132.

When a user wishes to stop controlling a robot 130, 131, 132 using the machine control panel 120A-120N, the user sets the mode control to remove mode. The user can then use the confirm control on the robot 130, 131, 132 to select which robots 130, 131, 132 they no longer wish to control. Alternatively, all robots 130, 131, 132 previously selected can be unselected when the mode control is set to remove mode. When the user returns the machine control panel 120A-120N to the operate mode, these robots 130, 131, 132 will no longer be controlled by the machine control panel 120A-120N.

In robot systems such as robot control system 100, an operator may need to be aware of which robots 130, 131, 132 they are controlling from a machine control panel 120A-120N or which robots 130, 131, 132 are currently within the span of control of the machine control panel 120A-120N. This is to ensure that operators are always aware of which robots 130, 131, 132 are associated with or being controlled by a machine control panel 120A-120N and are expected to undergo movement. To this end, each machine control panel 120A-120N of the plurality of machine control panels 120A-120N can be associated with a colour. In these examples, the light on each robot 130, 131, 132 in the system 100 can comprise a light that can be illuminated in multiple colours. In some examples, the light is illuminated the colour associated with the machine control panel 120A-120N associated with the robot 130, 131, 132 when the machine control panel 120A-120N is returned to the operate mode. In some examples, all robots 130, 131, 132 associated with the machine control panel 120A-120N and hence within the span of control of the machine control panel 120A-120N are illuminated the colour associated with the machine control panel 120A-120N. In other examples, only the robots 130, 131, 132 currently being controlled by the machine control panel 120A-120N are illuminated the colour associated with the machine control panel 120A-120N. In either case, a work area of the system 100 can comprise lights on the floor. The lights on the floor surrounding robots 130, 131, 132 within a span of control of a machine control panel 120A-120N can be illuminated the colour of the machine control panel 120A-120N to indicate the span of control of the machine control panel 120A-120N to both the user of the machine control panel and other users.

The use of lights on robots 130, 131, 132 that are illuminated a colour associated with a machine control panel 120A-120N enables a user to easily identify which robots 130, 131, 132 they are controlling or are within their span of control. This can also enable other people interacting with the system 100 to identify which robots 130, 131, 132 are currently being controlled by an operator using a machine control panel 120A-120N or are within the span of control of the machine control panel 120A-120N. In some examples, the machine control panel 120A-120N being associated with a colour may comprise the machine control panel 120A-120N being marked in that colour or otherwise being formed of a material in that colour. In addition, or as an alternative, each machine control panel 120A-120N may comprise a light and a machine control panel 120A-120N being associated with a colour may comprise illuminating the light on the machine control panel 120A-120N using that colour. In some examples, the colours may be selected to ensure they are easily distinguishable by operators who are colour blind so may comprise a colour-blind accessible palette of colours.

As mentioned above, when a robot 130, 131, 132 is connected or wired to a computer numerical controller 110A-110N, the respective computer numerical controller 110A-110N obtains a memory store for the robot 130, 131, 132 based on the identifier stored in the memory 140, 141, 142 of the robot 130, 131, 132. Depending upon the implementation, the computer numerical controller 110A-110N can obtain the memory store in one of several different ways. In one example, the identifier comprises the memory store. The computer numerical controller 110A-110N then obtains the memory store by obtaining the identifier/memory store from the robot 130, 131, 132 in response the robot being connected/wired to the computer numerical controller 110A-110N. Since the memory store comprises control parameters for the robot 130, 131, 132, the computer numerical controller 110A-110N then uses these parameters to control the robot 130, 131, 132. The computer numerical controller 110A-110N can then use this memory store as an instruction set to control the robot 130, 131, 132 or the memory store can contain any programs or applications necessary to control the robot 130, 131, 132. This makes it easy to configure a robot 130, 131, 132 to work with a new computer numerical controller 120A-120N. In some examples, the memory 140, 141, 142 of the robot 130, 131, 132 may comprise a USB stick or other external memory connected to the robot 130, 131, 132.

In another example, each computer numerical controller 110A-110N of the plurality of computer numerical controllers 110A-110N can comprise a memory storing the memory store for the robot 130, 131, 132 and, in some examples, the memory store for other robots 130, 131, 132. Each memory store can be stored in association with an identifier for the robot 130, 131, 132 that the memory store is associated with/belongs to. This enables the appropriate memory store for a robot 130, 131, 132 to be identified. The computer numerical controller 110A-110N obtaining a memory store for a robot 130, 131, 132 based on the identifier of the robot 130, 131, 132 comprises the computer numerical controller 110A-110N obtaining the identifier from the robot 103, 131, 132 in response to the computer numerical controller 110A-110N being connected to the robot 130, 131, 132. The computer numerical controller 110A-110N obtaining a memory store for a robot 130, 131, 132 then comprises using the identifier to identify the relevant memory store from its memory and then obtaining the relevant memory store from its memory. The memory instructions/data/details/applications in the memory store can then be used to control the robot 130, 131, 132. This reduces the memory requirements on the robot 130, 131, 132.

In yet another example, the system 100 further comprises a central memory that is accessible by the plurality of computer numerical controllers 110A-110N. This central memory stores the memory store for the robot 130, 131, 132, and in some examples, memory stores for other robots 130, 131, 132. The memory stores are stored in association with an identifier for the robot 130, 131, 132 to which the memory store belongs or is otherwise associated. The computer numerical controller 110A-110N obtaining the memory store based on the identifier comprises the computer numerical controller 110A-110N obtaining the identifier from the robot 103, 131, 132 in response to the computer numerical controller 110A-110N being connected to the robot 130, 131, 132. The computer numerical controller 110A-110N obtaining a memory store for a robot 130, 131, 132 then comprises the computer-numerical controller 110A-110N using the identifier to identify a memory store for the robot 130, 131, 132 and then obtaining the memory store from the central memory. The details/data/instructions/applications in the memory store can then be used by the computer numerical controller 110A-110N to control the robot 130, 131, 132. This both reduces the memory requirements on the robot 130, 131, 132 and since the computer numerical controller 110A-110N obtains the memory store from a central memory reduces the set up requirements when configuring a robot 130, 131, 132 to work with a new computer numerical controller 110A-110N.

The robot 130, 131, 132 may comprise a robotic arm that is used for example in vehicle manufacture such as aircraft manufacture. In other examples, the robot 130, 131, 132 may comprise any other suitable form of robot 130, 131, 132. In some examples where the system 100 comprise a plurality of robots, each robot 130, 131, 132 in the system 100 may comprise a robotic arm. In other examples, a first robot 130 of the system 100 may comprise a robotic arm while other robots 131, 132 in the system 100 may take any other suitable form.

The above provides an improved robot control system 100 that enables a robot 130, 131, 132 to be used with multiple different computer numerical controllers 110A-110N and multiple different machine control panels 120A-120N. This enables the robot 130, 131, 132 to be used in multiple different areas of a manufacturing space since the robot 130, 131, 132 can be connected/wired to the nearest computer numerical controller 110A-110N rather than needing to be always connected to the same computer numerical controller 110A-110N. In addition, if a computer numerical controller 110A-110N, machine control panel 120A-120N, or robot 130, 131, 132 goes out of action then the system 100 can be flexible reconfigured such that only that component rather than all connected components (e.g. a robot and machine control panel associated with a computer numerical controller) have to be removed from use. This increases the versatility, adaptability and useability of the system 100. Furthermore, since a computer numerical controller 110A-110N can be quickly configured to work with a new robot 130, 131, 132 particularly when the memory store is obtained directly from the robot 130, 131, 132 or from a central memory, a new system 100 can be quickly set up in a new location without requiring considerable configuration of the robots 130, 131, 132 to work with the computer-numerical controllers 110A-110N and machine control panels 120A-120N.

The application also relates to methods of configuring a computer numerical controller 110A-110N to control a robot 130, 131, 132 and methods of selecting a robot 130, 131, 132 to be controlled using a machine control panel 120A-120N.

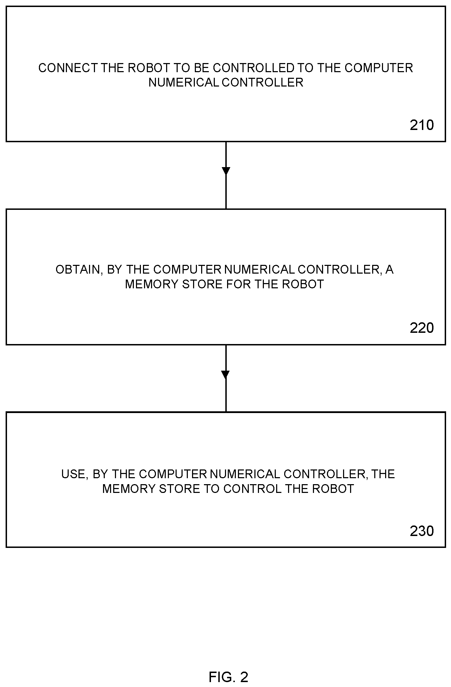

Figure 2 is a flowchart describing a method of configuring a computer numerical controller, such as computer numerical controllers 110A-110N to control a robot such as robots 130, 131, 132. The computer numerical controller 110A-110N being configured can comprise a processor and a computer-readable storage medium storing instructions that when executed cause the processor to perform the stages of the method implemented by the computer numerical controller. The computer numerical controller 110A-110N is wired to a plurality of machine control panels 120A-120N. As described above, the computer numerical controller 110A-110N can be directly wired to each machine control panel 120A-120N of the plurality of machine control panels 120A-120N. In other examples, the computer numerical controller 110A-110N and the plurality of machine control panels 120A-120N can be wired together via a network.

In step 210, a user connects a robot 130, 131, 132 that is to be controlled by the computer numerical controller 110A-110N to the computer numerical controller 110A-110N. This can comprise the user wiring the robot 130, 131, 132 to the computer numerical controller 110A-110N. Wiring the robot 130, 131, 132 to the computer numerical controller 110A-110N can enable a secure connection. However, in other examples, a wireless or other form of connection may be used.

In step 220, in response, to the robot 130, 131, 132, being connected to the computer numerical controller 110A-110N, the computer numerical controller 110A-110N obtains a memory store for the robot 130, 131, 132. The memory store for the robot 130, 131, 132 comprises control parameters for the robot 130, 131, 132. Obtaining the memory store for the robot 130, 131, 132 can comprise receiving from the robot 130, 131, 132 an identifier for the robot 130, 131, 132 and the computer numerical controller 110A-110N then obtaining the memory store from either the memory of the computer numerical controller 110A-110N or from a central memory, wherein the identifier is used to identify the appropriate memory store. In other examples, obtaining a memory store for the robot 130, 131, 132 can comprise receiving an identifier for the robot 130, 131, 132 from the robot 130, 131, 132, wherein the identifier can itself comprise the memory store. Hence, obtaining the memory store for the robot 130, 131, 132 can comprise receiving/obtaining the memory store from the robot 130, 131, 132 in response to the robot 130, 131, 132 being connected to the computer numerical controller 110A-110N. The memory store comprises the information, instructions, data, applications or command set the computer numerical controller 110A-110N will use to control the robot 130, 131, 132. The memory store can be different for different robots 130, 131, 132 reflecting that different operations, commands, applications, or instructions are needed to control different robots 130, 131, 132.

In step 230, once the computer numerical controller 110A-110N has obtained the memory store, it can use the memory store and/or the control parameters in the memory store to act as a computer numerical controller 110A-110N for the robot 130, 131, 132 and hence can be used to control robot 130, 131, 132. This can be in accordance with instructions provided by a machine control panel associated with the robot 130, 131, 132 such as machine control panels 120A-120N.

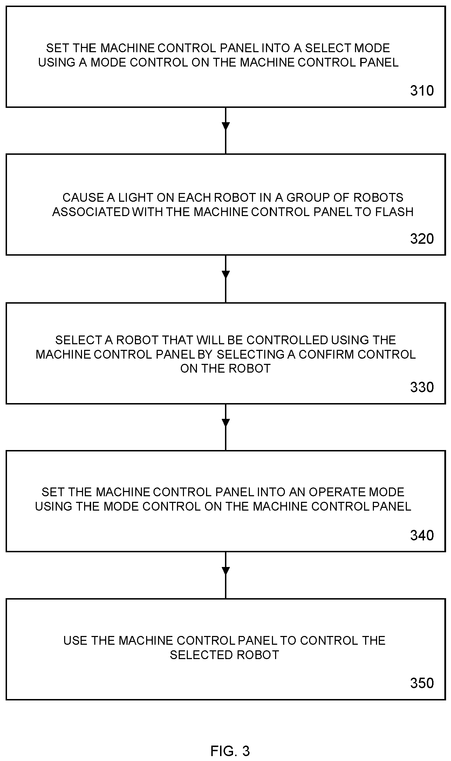

A machine control panel 120A-120N can be associated with a robot 130, 131, 132 in different ways. In one example, a machine control panel 120A-120N can be associated with a robot 130, 132, 132 by a user selecting the machine control panel 120A-120N using a selection control on each robot 130, 131, 132. The selection control can comprise a switch, lever, dial or other mechanical element or an element of a graphical user interface. The selection control can be used by a user to select between several different machine control panels 120A-120N. In other examples, a robot 130, 131, 132 can be associated with a machine control panel 120A-120N using a scanning system. The scanning system scans as work area and automatically associates each robot 130, 131, 132 in the work area with the nearest machine control panel 120A-120N. In some examples, a robot to be controlled using a machine control panel 120A-120N can be selected as described with respect to method 300 in Figure 3 below.

In some examples, each machine control panel 120A-120N of the plurality of machine control panels 120A-120N is associated with a different colour. The machine control panels 120A-120N can be associated with a colour in any suitable way, for example by being formed a material made of that colour, having a marking in that colour or having a light illuminated in that colour. In addition, the robot 130, 131, 132 can comprise a light that can be illuminated in multiple different colours upon command. As discussed in more detail below and above, when a robot 130, 131, 132, is associated with a machine control panel 120A-120N the light on the robot 130, 131, 132 can be illuminated the colour of the machine control panel 120A-120N. This enables a user of the machine control panel 120A-120N and any other users in the system 100 to know which robots 130, 131, 132 are associated with the machine control panel 120A-120N. This increases safety as it ensures a user is always aware of which robots 130, 131, 132 they are able to control and which robots 130, 131, 132 are being controlled by other users. In some examples the different colours associated with the machine control panels 120A-120N are selected from a colour-blind accessible palette of colours to ensure safe operation by operators who are colour blind.

As shown in Figure 3, the application also relates to a method 300 of a selecting a robot to be controlled by a machine control panel such as machine control panels 120A-120N. The machine control panel 120A-120N can comprise a computing device comprising a processor and a memory containing instructions that when executed cause the processor to implement the method 300. The machine control panel 120A-120N is wired to a plurality of computer numerical controllers 110A-110N. In some examples, this can comprise the machine control panel 120A-120N being wired directly to each of the computer numerical controllers 110A-110N. In other examples, the machine control panel 120A-120N being wired to the computer numerical controllers 110A-110N can comprise the machine control panel 120A-120N and the computer numerical controllers 110A-110N being wired in a network.

In step 310, the method comprises a user setting the machine control panel 120A-120N into a select mode. This is done using a mode control on the machine control panel 120A-120N. The mode control can comprise a switch, button, lever, dial or other mechanical device or an element of a graphical user interface. The mode control enables a user to select between several different modes of the machine control panel 120A-120N wherein the different modes comprise a select mode in which robots 130, 131, 132 that are to be controlled by the machine control panel 120A-120N are selected, an operate mode in which the machine control panel 120A-120N is used to control the selected robots 130, 131, 132 and a remove mode in which robots 130, 131, 132 to no longer be controlled by the machine control panel 120A-120N are removed.

In step 320, in response to the machine control panel 120A-120N being set to a select mode, the machine control panel 120A-120N causes a light on each robot 130, 131, 132 of a group of robots 130, 131, 132 associated with the machine control panel 120A-120N to flash. The group of robots 130, 131, 132 can be associated with the machine control panel 120A-120N in several different ways. In one example, the group of robots can be associated with the machine control panel 120A-120N by having a user select the machine control panel 120A-120N on each robot 130, 131, 132 in the group using a selection control on the respective robot 130, 131, 132. The selection control can comprise, a knob, lever, dial or other mechanical control that enables a user to select a machine control panel 120A-120N from among several machine control panels 120A-120N. Alternatively, the selection control can comprise an element on a graphical user interface. In other examples, the group of robots 130, 132, 132 can be associated with the machine control panel 1201A-120N using a scanning system. The scanning system scans a work area for robots 130, 131, 132 then automatically assigns each robot 130, 131, 132 to the nearest machine control panel 120A-120N. While the light on each robot 130, 131, 132 is described as being made to flash, the skilled person would understand that in other examples the light can be used to indicate the robots 130, 131, 132 are available for selection in another way, for example by changing the colour or brightness of the light or in any other suitable way.

In step 330, the method comprises the user selecting one or more of the robots 130, 131, 132 with flashing lights to control using the machine control panel 120A-120N. This is done by the user selecting a confirm control on each robot 130, 131, 132, the user wishes to control. The confirm control may comprise a button, knob, level etc. on the robot 130, 131, 132. Alternatively, the confirm control may comprise an element of a graphical user interface of the robot 130, 131, 132. The user selecting the confirm control on a robot 130, 131, 132 with a flashing light indicates that the robot 130, 131, 132 should be controlled by the machine control panel 120A-120N when then machine control panel 120A-120N is returned to operate mode. In some examples, after the user has selected a robot 130, 131, 132 using the confirm control, the light on the robot 130, 131,132 stops flashing to indicate that the robot 130, 131, 132 has been selected. This provides a simple visual indication to the user relating the robots 130, 131, 132 they have selected. In other examples, when another form of indicator to a flashing light is used, for example when the light changes colour or brightness then the selection of the robot 130, 131, 132 can be indicated by the light returning to the original colour or brightness. The skilled person would understand that other indications are also possible.

In step 340, the method comprises the user using the mode control to switch the machine control panel 120A-120N back to the operate mode. As mentioned above, the mode control may comprise a switch, button, lever, dial or other mechanical device or an element of a graphical user interface.

In some examples, the machine control panel 120A-120N may be associated with a colour. When there are a plurality of machine control panels 120A-120N each machine control panel 120A-120N of the plurality of machine control panels 120A-120N can be associated with a different colour. In these examples, the light on all robots 130, 131, 132 in the group or robots 130, 131, 132 associated with the machine control panel 120A-120N may be illuminated the colour of the machine control panel 120A-120N in response to the machine control panel 120A-120N switching to the operate mode. In other examples, only the light on robots 130, 131, 132 selected by the user may be illuminated the colour of the machine control panel 120A-120N in response to the machine control panel 120A-120N being switched to the operate mode. This enables a user to see either the robots 130, 131, 132 within the span of control of the machine control panel 120-120N or the robots 130, 131, 132 the user is currently controlling with the machine control panel 120A-120N. In some examples, a machine control panel 120A-120N being associated with a colour comprises illuminating a light on the machine control panel 120A-120N the colour associated with the machine control panel 120A-120N. This enables a user to easily match the robots 130, 131, 132 to the machine control panel 120-120N.

In addition, to lights on the robots 130, 131, 132, in some examples, there can also be lights on the floor of a work area in which the robots 130, 131, 132 are being used. The lights on the floor can surround the robots 130, 131, 132. In these examples, the lights on the floor can be used to indicate a span of control associated with a machine control panel 120-120N. In particular, the lights on the floor can be illuminated a colour associated with the machine control panel 120A-120N that is currently associated with a robot 130, 131, 132 near the light on the floor or with which the light on the floor is associated. For example, the lights on the floor can be used to form coloured boundaries wherein the robots 130, 131, 132 within a coloured boundary are associated with a machine control panel 120A-120N associated with that colour. This enables a user of a machine control panel 120A-120N to see the limits of their span of control. This also enables a user of a machine control panel 120A-120N to identify robots 130, 131, 132 within their span of control if only robots 130, 131, 132 currently being controlled have a light illuminated the colour of the machine control panel 120A-120N.

In step 350, the method comprises the user using the machine control panel 120A-120N in the operate mode to control the selected robot 130, 131, 132. This may comprise the user providing instructions to the robot 130, 131, 132 via the machine control panel 120A-120N. The machine control panel 120A-120N can then forward these instructions to a computer numerical controller 110A-110N connected to the robot 130, 131, 132 and the computer numerical controller 110A-110N can use the instructions to control the robot 130, 131, 132. In some examples, the computer numerical controller 110A-110N can be configured to control a robot 130, 131, 132 in accordance with method 200 described with respect to Figure 2.

In summary, in some examples, the application relates to a robot control system comprising a plurality of computer numerical controllers, a plurality of machine control panels and at least one robot. When a robot of the at least one robot is connected or wired to a computer numerical controller from the plurality of computer numerical controllers, the computer numerical controller uses an identifier of the robot to obtain a memory store for the robot wherein the memory store contains the information the computer numerical controller needs to control the robot in that the memory store contains control parameters for the robot. The robot is associated with a machine control panel of a plurality of machine control panels. This can be done by the user selecting a machine control panel using a selection control on the robot wherein the selection control enables a user to select from among multiple computer numerical controllers. The robot being associated with a machine control panel means the robot is within the machine control panels span of control. However, it does not necessarily mean the machine control panel is in active use to control the robot. When a user wishes to use an associated machine control panel to control a robot, the user sets a mode control on the machine control panel to a select mode. This causes a light on all robots within the span of control of the machine control panel to flash. The user can then select the robots to control by selecting a confirm control on the robot. In response, the light on the robot can stop flashing and instead be continuously illuminated. Once the desired robots are selected, the user can use the mode control to set the machine control panel back to an operate mode. The machine control panel can then be used to control the selected robots via the computer numerical controllers connected to the robots. In some examples, only a single robot can be controlled by a machine control panel at any one time. In other examples a machine control panel can control multiple robots at once. Each machine control panel of the plurality of machine control panels can be associated with a different colour. Each robot in the system can comprise a light which can be illuminated in different colours. When a robot is associated with a machine control panel, the light on the robot can be illuminated the colour associated with the machine control panel to ensure it is clear which robots are associated with which machine control panels. In other examples, only the lights on selected robots are illuminated the colour of the machine control panel. This ensures it is easy to determine which robots are currently being controlled. As well as lights on the robots, there may be lights on the ground surrounding the robots which can be illuminated a colour associated with a machine control panel to indicate a scope of control of that machine control panel.

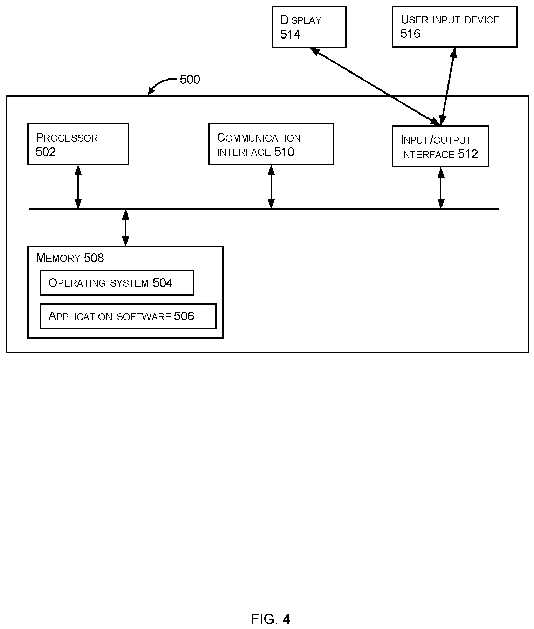

Figure 4 illustrates various components of an exemplary computing-based device 500 which may be implemented as any form of a computing and/or electronic device, and in which the computer numerical controllers and/or machine control panels described above may be implemented.

Computing-based device 500 comprises one or more processors 502 which may be microprocessors, controllers or any other suitable type of processors for processing computer executable instructions to control the operation of the device in order to implement the functioning of the computer numerical control and/or machine control panel. In some examples, for example where a system on a chip architecture is used, the processors 502 may include one or more fixed function blocks (also referred to as accelerators) which implement a part of the method of the computer numerical controller and/or machine control panel in hardware (rather than software or firmware). Platform software comprising an operating system 504 or any other suitable platform software may be provided at the computing-based device to enable application software 506 to be executed on the device.

The computer executable instructions may be provided using any computer-readable media that is accessible by computing based device 500. Computer-readable media may include, for example, computer storage media such as memory 508 and communications media. Computer storage media, such as memory 508, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 508) is shown within the computing-based device 500 it will be appreciated that the storage may be distributed or located remotely and accessed via a network or other communication link (e.g. using communication interface 510).

The computing-based device 500 also comprises an input/output interface 512 arranged to output display information to a display device 514 which may be separate from or integral to the computing-based device 500. The display information may provide a graphical user interface. The input/output interface 512 is also arranged to receive and process input from one or more devices, such as a user input device 516 (e.g. a mouse or a keyboard). This user input may be used to, for example select a robot or issue commands to the robot for a machine control panel. In an embodiment the display device 514 may also act as the user input device 516 if it is a touch sensitive display device. The input/output interface 512 may also output data to devices other than the display device, e.g. a locally connected printing device (not shown in Figure 5).

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A robot control system (100) comprising:
a plurality of computer numerical controllers (110A-110N);
a plurality of machine control panels (120A-120N) wherein each computer numerical controller(110A-110N) of the plurality of computer numerical controllers (110A-110N) is wired to each machine control panel (120A-120N) of the plurality of machine control panels (120A-120N); and
a robot (130, 131, 132) wherein the robot (130, 131, 132) comprises a memory (140, 141, 142) storing an identifier for the robot (130, 131, 132) and wherein:
each computer numerical controller (110A-110N) of the plurality of computer numerical controllers (110A-110N) is configured to:
obtain a memory store for the robot (130, 131, 132) based on the identifier stored in the robot memory (140, 141, 142) in response to the robot (130, 131, 132) being connected to the respective computer numerical controller (110A-110N), wherein the memory store for the robot (130, 131, 132) comprises control parameters for the robot (130, 131, 132); and
use the obtained memory store when controlling the robot (130, 131, 132); and each machine control panel (120A-120N) is configured to:
provide a user interface that enables a user to control the robot (130, 131, 132) when the robot (130, 131, 132) is connected to any computer numerical controller (110A-110N) of the plurality of computer numerical controllers (110A-110N).

2. The robot control system (100) of claim 1 further comprising:
a plurality of robots (130, 131, 132) wherein the robot (130, 131, 132) is a first robot of the plurality of robots (130, 131, 132) and each robot (130, 131, 132) of the plurality of robots (130, 131, 132) comprises a memory (140, 141, 142) storing a respective identifier for the respective robot (130, 131, 132); and wherein
each computer numerical controller (110A-110N) is configured to:
obtain a memory store for a respective robot (130, 131, 132) of the plurality of robots (130, 131, 132) based on the respective identifier stored in the respective robot memory (140, 141, 142) in response to the respective robot (130, 131, 132) being connected to the respective computer numerical controller (110A-110N); and
use the respective obtained memory store when controlling the respective robot (130, 131, 132); and
the user interface of each machine control panel (120A-120N) enables a user to control one or more robot (130, 131, 132) from the plurality of robots (130, 131, 132) when the one or more robots (130, 131, 132) are each connected to a respective computer numerical controller (110A-110N) of the plurality of computer numerical controllers (110A-110N).

3. The robot system (100) of any previous claim, wherein:
the robot (130, 131, 132) comprises a selection control on the robot (130, 131, 132) wherein the selection control enables a user to select a machine control panel (120A-120N) from the plurality of machine control panels (120A-120N) in order to associate the robot (130, 131, 132) with the machine control panel (120A-120N).

4. The robot control system (100) of claim 3, wherein:
each respective machine control panel (120A-120N) of the plurality of machine control panels (120A-120N) is associated with a respective colour; and
the robot (130, 131, 132) further comprises a light wherein the light is configured to be illuminated in the respective colour of an associated machine control panel (120A-120N).

5. The robot system (100) of claim 4, wherein:
the user interface of each machine control panel (120A-120N) comprises a mode control that enables a user to select between a select mode, an operate mode and a remove mode;
the light on the robot (130, 131, 132) is configured to flash in response to the user setting the machine control panel (120A-120N) to the select mode and the robot (130, 131, 132) being associated with the machine control panel (120A-120N);
the robot (130, 131, 132) further comprises a confirm control wherein the user selecting the confirm control when the light on the robot is flashing causes the robot (130, 131, 132) to be selected for control by the machine control panel (120A-120N); and
the user interface of each machine control panel (120A-120N) is configured to control the robot (130, 131, 132) in response to the user selecting the confirm control on the robot (130, 131, 132) and selecting the operate mode on the mode control.

6. The robot control system (100) of any previous claim wherein:
the identifier comprises the memory store for the robot (130, 131, 132); and
the respective computer numerical controller (110A-110N) obtaining the memory store for the robot (130, 131, 132) comprises the respective computer numerical controller (110A-110N) receiving the memory store from the robot (130, 131, 132).

7. A method (200) of configuring a computer numerical controller (110A-110N) to control a robot (130, 132, 132), the method comprising:
connecting, by a user, the robot (130, 131, 132) to be controlled by the computer numerical controller (110A-110N) to the computer numerical controller (110A-110N);
in response to the robot (130, 131, 132) being connected to the computer numerical controller (110A-110N), obtaining, by the computer numerical controller (110A-110N), a memory store for the robot (130, 131, 132) wherein the memory store for the robot (130, 131, 132) comprises control parameters for the robot (130, 131, 132);
using, by the computer numerical controller (110A-110N) the control parameters for the robot (130, 131, 132) to control the robot.

8. The method (200) of claim 7, wherein, connecting, by the user, the robot (130, 131, 132) to the computer numerical controller (110A-110N) comprises:
wiring, by the user, the robot (130, 131, 132) to the computer numerical controller (110A-110N).

9. The method (200) of claim 7 or claim 8 wherein, obtaining, by the computer numerical controller (110A-110N), a memory store for the robot (130, 131, 132) comprises:
obtaining, by the computer numerical controller (110A-110N), the memory store for the robot (130, 131, 132) from the robot (130, 131, 132) in response to the robot being connected to the computer numerical controller (110A-110N).

10. A method (300) of selecting a robot (130, 131, 132) to be controlled by a machine control panel (120A-120N), the method comprising:
setting, by a user, the machine control panel (120A-120N) into a select mode using a mode control on the machine control panel (120A-120N);
in response to the machine control panel (120A-120N) being set into the select mode causing, by the machine control panel (120A-120N) a light on each robot (130, 131, 132) of a group of robots (130, 131, 132) associated with the machine control panel (120A-120N) to flash;
selecting by the user, a selected robot (130, 131, 132) that will be controlled using the machine control panel (120A-120N) by the user selecting a confirm control on the robot (130, 131, 132);
setting, by the user, the machine control panel (120A-120N) into an operate mode using the mode control on the machine control panel (120A-120N); and
using, by the user, the machine control panel (120A-120N) in the operate mode to control the selected robot (130, 131, 132).

11. The method (300) of claim 10 further comprising:
in response to the user selecting a confirm control on the selected robot (130, 131, 132), continuously illuminating the light on the selected robot (130, 131, 132).

12. The method (300) of claim 10 or 11 wherein:
the machine control panel (120A-120N) is associated with a colour; and
the light on each robot (130, 131, 132) of the group of robots (130, 131, 132) flashes the colour associated with the machine control panel (120A-120N).

13. The method (300) of any of claims 10 to 12 wherein:
the machine control panel (120A-120N) is associated with a colour; and
the method further comprises in response to the machine control panel (120A-120N) being set to the operate mode illuminating the light on each robot (130, 131, 132) in the group of robots the colour associated with the machine control panel (120A-120N).

14. The method (300) of any of claims 10 to 13 wherein:
the machine control panel (120A-120N) is associated with a colour; and
the method further comprises further comprises illuminating lights on the floor of a work area around the group of robots (130, 131, 132) the colour associated with the machine control panel (120A-120N), wherein the lights on the floor indicate which robots (130, 131, 132) of a plurality of robots (130, 131, 132) are associated with the machine control panel (120A-120N).

15. The method (300) of any of claims 10 to 14 wherein, the group of robots (130, 131, 132) associated with the machine control panel (120A-120N) is determined by:
the user selecting the machine control panel (120A-120N) on each robot (130, 131, 132) using a selection control on the respective robot (130, 131, 132) wherein the selection control can be used to select from multiple different machine control panel (120A-120N).
